# EUROPÄISCHE PATENTSCHRIFT

(11) **EP 1 853 466 B1**
(45) Veröffentlichungstag und Bekanntmachung des Hinweises auf die Patenterteilung: **09.01.2013**
(21) Anmeldenummer: 06704710.0
(22) Anmeldetag: 21.02.2006
(51) Int. Cl.: B60R 19/40, B62D 21/15, B60R 19/16

(54) **ABWEISVORRICHTUNG BEI TEILÜBERDECKTER FRONTALKOLLISION FÜR KRAFTFAHRZEUGE**
DEFLECTOR DEVICE FOR PARTIALLY OVERLAPPING FRONTAL COLLISION OF MOTOR VEHICLES
DISPOSITIF DE DEFLEXION INTERVENANT EN CAS DE COLLISION FRONTALE A RECOUVREMENT PARTIEL, POUR VEHICULES AUTOMOBILES

(30) Priorität: 21.02.2005 AT 942005 U
(43) Veröffentlichungstag der Anmeldung: 14.11.2007
(73) Patentinhaber: Magna Steyr Fahrzeugtechnik AG & Co KG, 8041 Graz (AT)
(72) Erfinder: SCHÖNBERGER, Gerhard, A-8074 Raaba (AT); BREITENHUBER, Wilhelm, A-9020 Klagenfurt (AT); SCHIMPL, Wolfgang, A-8020 Graz (AT); EICHBERGER, Arno, A-8061 St. Radegund (AT); PERNKOPF, Friedrich, A-4040 Linz (AT)
(74) Vertreter: Rausch, Gabriele
(86) Internationale Anmeldenummer: PCT/AT2006/000068
(87) Internationale Veröffentlichungsnummer: WO 2006/086818

(56) Entgegenhaltungen:
- WO-A-2005/110815
- GB-A- 2 336 811
- US-A1- 2002 121 788
- US-A1- 2004 046 403
- US-A1- 2005 035 608
- US-A1- 2005 110 284
- PATENT ABSTRACTS OF JAPAN Bd. 2003, Nr. 12, 5. Dezember 2003 (2003-12-05) -& JP 2004 306871 A (TOYOTA MOTOR CORP), 4. November 2004 (2004-11-04)

## Beschreibung

Die Erfindung betrifft eine Abweisvorrichtung bei teilüberdeckter Frontalkollision für Kraftfahrzeuge, deren Vorderwagen einen linken und einen rechten Längsträger aufweist, welche vor einem Vorderrad angeordnet ist und das Vorderrad im Kollisionsfall schützt. Unter einer teilüberdeckten Frontalkollision ist eine Frontalkollision zu verstehen, bei der die kollidierenden Fahrzeuge sich mit im Wesentlichen parallelen, aber seitlich gegeneinander versetzten Richtungsvektoren aufeinander zu bewegen. Die Kollisionszone ist somit nur ein seitlicher Teil des Vorderwagens.

Dieser seitliche Teil des Vorderwagens vor der Fahrgastzelle ist bei Fahrzeugen gewöhnlich weniger steif als der mittlere Teil vor der Fahrgastzelle und nimmt auch weniger Kollisionsenergie auf, sodass die Verformungen der Fahrgastzelle erheblich sind. Es besteht insbesondere die Gefahr, dass das jeweilige Rad in den Passagierraum eindringt. Darüber hinaus tritt bei solchen Kollisionen in der Regel noch ein besonders gefährliches Phänomen auf: Bereits bei relativ kleiner Überdeckung verhaken sich die kollisionsseitigen Vorderräder der beiden Fahrzeuge ineinander; ein Rad zumindest des einen Fahrzeuges kollidiert mit der Radaufhängung des anderen. Dadurch wirken nicht nur besonders starke Längskräfte auf die Räder, die sie in den Passagierraum stoßen, sondern die beiden Fahrzeuge werden zumindest teilweise formschlüssig miteinander verbunden und so deren Vorbeigleiten aneinander verhindert. Zusätzlich wird den beiden ineinander verhakten Fahrzeuge noch gemeinsam ein Drall um die Hochachse erteilt.

Dieses Phänomen ist in der Literatur unter eben dem Namen "Verhaken" bekannt. Als Gegenmaßnahme ist es aus der DE 195 32 858 A1 bekannt, die vordere Stoßstange im Seitenbereich in Draufsicht stark gerundet und so steif auszubilden, dass diese eine Berührung der kollisionsseitigen Vorderräder verhindert und ein aneinander Abgleiten der beiden Fahrzeuge bewirkt. Man kann sich vorstellen, dass die Stoßstange bei den heute vorkommenden Kollisionsgeschwindigkeiten dazu nicht stark genug ist. Außerdem hat die Stoßstange noch andere Sicherheitsanforderungen zu erfüllen, die dem zuwider laufen: Eine möglichst breite Kollisionsfläche bei ganz überdeckter Frontalkollision und dosiertes Nachgeben bei Kollision mit einem Fußgänger.

Aus der US 5,275,436 ist es weiters bekannt, vor und hinter den Vorderrädern etwa vertikale Ablenkbleche vorzusehen, die in der Horizontalen so ausgerichtet und gekrümmt sind, dass sie das Rad im Kollisionsfall positiv einwärts schwenken. Aber auch diese Ablenkbleche bauen sehr schwer, wenn sie diese Wirkung tatsächlich haben sollen, und erfordern ebenfalls eine besonders starke Stoßstange mit den oben erwähnten Nachteilen. Vor allem aber ist die Wirkung des vorderen Ablenkbleches aus kinematischen Gründen unzureichend: Wenn es in ausreichendem Abstand vor dem Rad angeordnet ist und nicht über die äussere vertikale Begrenzungsfläche des Rades hinausreicht, schwenkt sein äusseres Ende auf einem Kreisbogen einwärts. Es berührt dann das Rad innerhalb seiner äusseren vertikalen Begrenzungsfläche und kann es nicht mehr erfassen und einwärts schwenken. Eher zerstört es das Rad und die abweisende Wirkung tritt nicht ein.

Aus der JP 2004-306871 A, das als nächstliegender Stand der Technik angesehen wird, ist eine Schutzvorrichtung zur Absorption der Kollisionsenergie bei teilüberdeckter Frontalkollision bekannt, die aus beiderseits in der Stoßstange geführten Seitenteilen besteht. Die Seitenteile sind kreisbogenförmig und werden bei Bevorstehen einer Kollision von einem im Krümmungsmittelpunkt der Seitenteile angeordneten Elektromotor aus der Stoßstange gezogen. In der so erreichten Stellung überragen sie das zugehörige Vorderrad nach aussen, ohne jedoch auf dieses einzuwirken.

Weiters wird in der nach dem Prioritätsdatum der vorliegenden Patentanmeldung (am 26.05.2005) veröffentlichten älteren Patentanmeldung US 2005/0110284 A1 vorgeschlagen, die Stoßstange eines Kraftfahrzeuges zwecks Absorption der Kollisionsenergie mit nach aussen verschiebbaren Elementen zu versehen. Über die Art der Kollision und ein Zusammenwirken mit den Rädern ist dieser Veröffentlichung nichts zu entnehmen.

Der Erfindung liegt die Aufgabe zugrunde, ein Umgreifen des betroffenen Vorderrades sicher herbeizuführen, um den von einem kollidierenden Fahrzeug geführten Stoss von dem betroffenen Vorderrad abzulenken, und das bei minimalem Bauaufwand.

Erfindungsgemäß wird das dadurch erreicht, dass sie aus einem am Vorderwagen befestigten Kragarm und aus einem auf diesem quer zur Fahrtrichtung nach aussen verschiebbaren Schild besteht, wobei der Arm sich vor dem Rad im Wesentlichen quer zur Fahrtrichtung erstreckt und eine Führung für den Schild und eine Kraftquelle zum Verschieben des Schildes nach aussen aufweist, und dass der Kragarm um eine vertikale Achse schwenkbar am Längsträger so befestigt ist, sodass im Kollisionsfall der nach außen verschobene Schild das Rad umfasst und dabei in die Stellung verschwenkt, in der auch das Rad selbst den Kollisionsgegner abweist. Kragarm und Schild können dabei in Fahrzeugquerrichtung so kurz gehalten sein, dass sie (von oben gesehen) nicht nach aussen über das Rad ragen müssen, weil der Schild erst im Kollisionsfall so weit nach aussen verschoben wird, dass er das jeweilige Rad umgreift und so den Kollisionsgegner abweist. So besteht die Abweisvorrichtung aus nur zwei einfachen Bauteilen und kann ohne nennenswerte konstruktive Änderungen in einen bestehenden Fahrzeugkörper eingeplant werden.

In einer bevorzugten Ausführungsform besteht die Führung aus zwei parallelen den Kragarm bildenden Rohren und aus mindestens einer am Schild befestigten Konsole, wobei die mindestens eine Konsole an der dem Rad zugewandten Seite des Schildes angebracht ist (Anspruch 2). Diese ist besonders billig und einfach zu fertigen. Vorzugsweise ist dann die Kraftquelle zwischen den beiden Rohren angeordnet, wobei ein Ende der Kraftquelle an der Konsole und deren anderes Ende am Kragarm angreift (Anspruch 3). Durch den bezüglich der Führungen symmetrischen Kraftangriff erfolgt die Verschiebung mit minimaler Reibung und ohne dass eine Hemmung durch Verkanten eintreten könnte.

Die beiden Rohre haben mit Vorteil einen gemeinsamen Fuß, der an dem jeweiligen Längsträger befestigt ist (Anspruch 4). Mittels dieses Fußes kann der Kragarm fest mit dem Vorderwagen, insbesondere mit dem Längsträger verbunden sein, dann wird er sich im Kollisionsfall verbiegen. Der Aufwand für eine steife Verbindung lohnt sich in den meisten Fällen nicht. Eine besonders leichte und funktionstüchtige Konstruktion zeichnet sich dadurch aus, dass der Fuß um eine vertikale Achse schwenkbar am Längsträger so befestigt ist, dass er bei Einwirkung einer bestimmten Kollisionskraft auf das betreffende Rad zu verschwenkt wird. (Anspruch 5).

Die Kraftquelle ist entweder eine Druckfeder (Anspruch 6) oder ein pyrotechnischer Satz (Anspruch 7). Weiters kann der Schild Versteifungsrippen aufweisen. (Anspruch 8);

Im Folgenden wird die Erfindung anhand von Abbildungen beschrieben und erläutert. Es stellen dar:
- Fig. 1: Ein Schema der erfindungsgemäßen Vorrichtung, in Ruhestellung,
- Fig. 2: wie Fig. 1, in einer ersten Betriebsstellung,
- Fig. 3: wie Fig. 1, in einer weiteren Betriebsstellung,
- Fig. 4: Eine bevorzugte Ausführungsform der erfindungsgemäßen Vorrichtung in Ruhestellung,
- Fig. 5: wie Fig. 4, im Kollisionsfall,

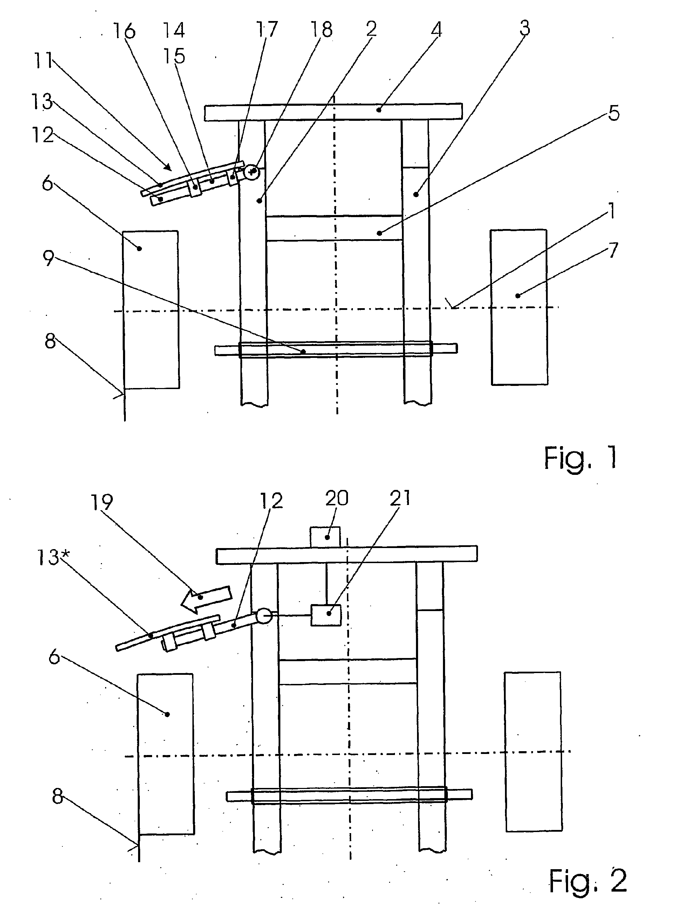

In **Fig. 1** ist der Vorderwagen eines Kraftfahrzeuges nur durch seine beiden Längsträger 2,3 einen Stoßstangenträger 4, einen Querträger 5 und die Mittellinie 1 der Vorderachse angedeutet. Im Folgenden wird nur die linke Seite mit dem linken Vorderrad 6 und dem linken Längsträger 2 beschrieben; alles trifft aber auch für die rechte Fahrzeugseite mit dem rechten Vorderrad 7 und dem rechten Längsträger 3 zu. Weiters ist noch das hinter der Vorderachse angeordnete Lenkgetriebe 9 einer Zahnstangenlenkung angedeutet.

Vor dem linken Vorderrad 6, dessen äußere vertikale Begrenzungsfläche mit 8 bezeichnet ist, befindet sich eine erfindungsgemäße Abweisvorrichtung 11. Die Abweisvorrichtung 11 besteht aus einem Kragarm 12 und einem Schild 13, der am Kragarm verschiebbar geführt ist. Der Kragarm 12 bildet eine Führung 14 für Konsolen 16, 17 des Schildes 13 und enthält eine Kraftquelle 15. Der Kragarm hat einen Fuß 18, der am Längsträger 2 befestigt ist.

**Fig. 2** zeigt die Vorrichtung kurz vor oder in einem sehr frühen Stadium einer teilüberdeckten Frontalkollision. Ein Sensor 20 ist im ersteren Fall ein Annäherungssensor oder im zweiten Fall ein Kollisionssensor, der über ein Steuergerät 21 die Kraftquelle 15 aktiviert. Das ist in Fig. 2 bereits geschehen, der Schild 13 wurde bereits von der Kraftquelle 15 in Richtung des Pfeiles 19 nach außen verschoben und in die Stellung 13* gebracht. In dieser ragt er seitlich über das Vorderrad 6 hinaus und lenkt so den Kollisionsgegner vom Rad 6 weg nach außen ab.

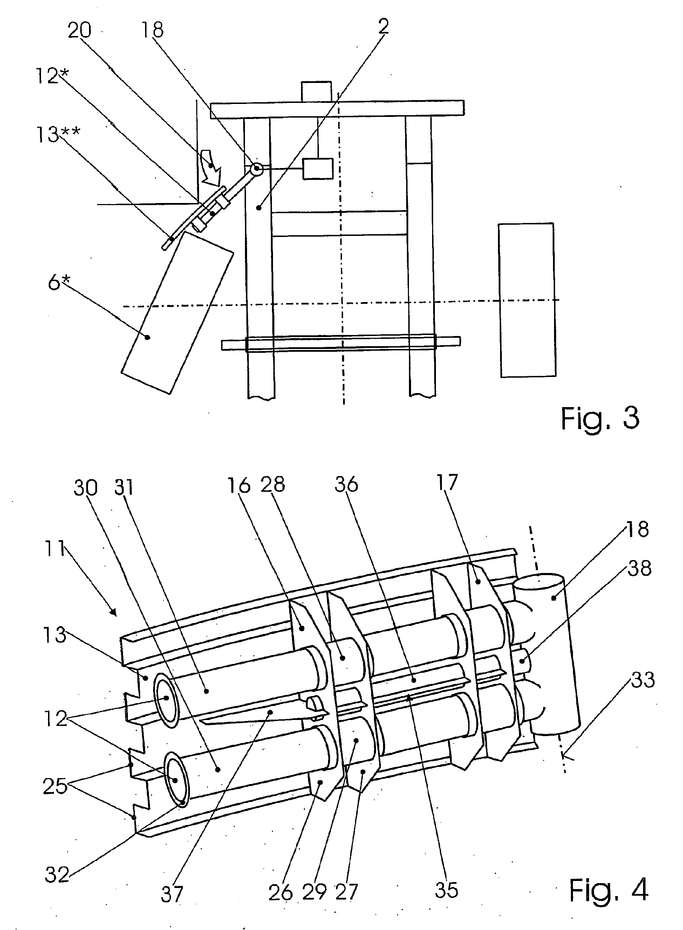

**Fig. 3** zeigt beispielsweise ein späteres Stadium der Kollision, das nicht in jedem Fall erreicht wird. In diesem wurde der Kragarm 12 wie mit dem Pfeil 20 angedeutet, gegen den Uhrzeigersinn verschwenkt. Das kann durch Verbiegen oder durch Drehung des Fußes bezüglich des Längsträgers 2 erfolgt sein. Im letzteren Fall ist die Verbindung zwischen dem Fuß 18 und dem Längsträger 2 so gestaltet, dass die Verdrehung erst ab einer bestimmten Stoßkraft erfolgt. In dieser Phase der Kollision hat der nach außen verschobene Schild 13, nunmehr als 13** bezeichnet, das Rad 6 nicht nur umfasst, sondern auch in die Stellung 6* verschwenkt, sodass nun auch das Rad 6* selbst den Kollisionsgegner abweist. Das Rad kann sich aber auch in anderer Weise verlagern und/oder verformen; wesentlich ist, dass es vom Kragarm umgriffen wird.

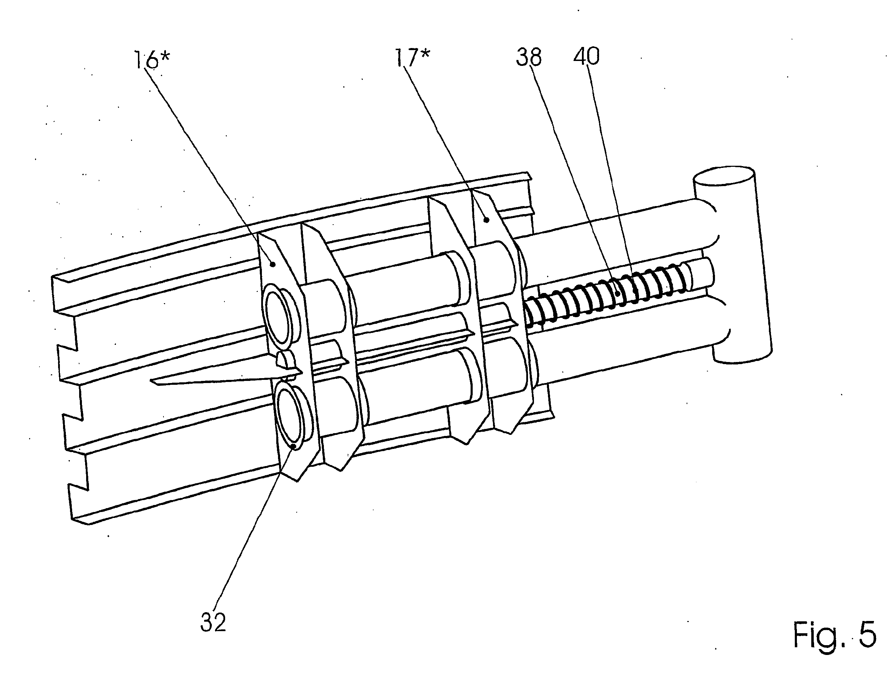

**Fig. 4** und **Fig. 5** zeigen die Abweisvorrichtung 11 im Detail, erstere in Ruhestellung, die zweite in der Stellung entsprechend der Fig. 2. Der Schild 13 ist eine aus Steifigkeitsgründen leicht gebogene und mit in Fahrzeugquerrichtung angeordneten Versteifungsrippen 25 versehene Platte. An dieser sind zwei Konsolen 16, 17 befestigt. Jede Konsole besteht aus zwei Stegblechen 26, 27, die je zwei Führungsbüchsen 28, 29 aufnehmen. Die Führungsbüchsen 28, 29 der beiden Konsolen 16, 17 umgeben zwei parallele Führungsrohre 30, 31 die den Kragarm 12 bilden. Sie haben an ihren äußeren Enden Endanschläge 32 und sind an ihren inneren Enden mit dem Fuß 18 verbunden. Dieser ist hier um eine vertikale Achse 33 verschwenkbar, wobei dafür gesorgt ist, dass die Schwenkbewegung erst beginnen kann, wenn die Stoßkraft eine bestimmte Größe überschritten hat. Der Querschnitt der Führungsrohre 30, 31 kann kreisförmig oder anders sein.

Weiters ist in den beiden Konsolen 16, 17 zwischen den beiden Führungsrohren 30, 31 eine Hülle 36 der Kraftquelle 35 befestigt. Zur besseren Krafteinleitung in den Schild 13 ist die Hülle 36 über ihre ganze Länge mittels eines Kammes 37 mit dem Schild 13 verbunden, zum Beispiel verschweisst. In Fig. 4 ist ein kleines Stück einer Stange 38 zu sehen, die mit dem Fuß 18 fest verbunden ist. In ihrem Inneren befindet sich ein nicht sichtbarer kolbenförmiger Körper. Wird die Kraftquelle 35 ausgelöst oder beaufschlagt, so bewirkt sie ein Verschieben der Hülle 36 bezüglich des Fußes 38, was in Fig. 5 zu sehen ist. Es ist erkennbar, dass die Kraftquelle hier eine starke Druckfeder 40 ist, die die Hülle 36 nach außen verschiebt, wenn diese durch Einwirkung des Steuergerätes auf einen nicht dargestellten Verriegelungsmechanismus freigegeben wird. Die Kraftquelle könnte aber ebenso ein pyrotechnischer Satz sein. Dann befindet sich in der Hülle 36 ein geeigneter Sprengsatz, der durch ein elektrisches Signal von dem Steuergerät 21 ausgelöst wird.

## Patentansprüche

1. Abweisvorrichtung bei teilüberdeckter Frontalkollision für Kraftfahrzeuge, deren Vorderwagen einen linken und einen rechten Längsträger (2,3) aufweist, und die vor einem Vorderrad (6) angeordnet ist und das Vorderrad im Kollisionsfall schützt, **dadurch gekennzeichnet, dass** sie aus einem am Vorderwagen befestigten Kragarm (12) und aus einem auf diesem quer zur Fahrtrichtung nach aussen verschiebbaren Schild (13) besteht, wobei der Kragarm (12) sich vor dem Rad (6) im Wesentlichen quer zur Fahrtrichtung erstreckt und eine Führung (14) für den Schild (13) und eine Kraftquelle (15) zum Verschieben des Schildes (13) nach aussen aufweist, und wobei der Kragarm (11) um eine vertikale Achse (33) schwenkbar am Längsträger (2) so befestigt ist, dass er im Kollisionsfall auf das betreffende Rad (6) zu verschwenkt wird (Pfeil 20), sodass der nach außen verschobene Schild (13**) das Rad (6) umfasst und dabei in die Stellung (6*) verschwenkt, in der auch das Rad (6*) selbst den Kollisionsgegner abweist.

2. Abweisvorrichtung nach Anspruch 1, **dadurch gekennzeichnet, dass** die Führung (14) aus zwei parallelen den Kragarm (12) bildenden Rohren (30,31) und aus mindestens einer am Schild (13) befestigten Konsole (16,17) besteht, wobei die mindestens eine Konsole (16,17) an der dem Rad (6) zugewandten Seite des Schildes (13) angebracht ist.

3. Abweisvorrichtung nach Anspruch 2, **dadurch gekennzeichnet, dass** zwischen den beiden Rohren (30,31) die Kraftquelle (15) angeordnet ist, deren ein Ende an der Konsole (16) und deren anderes Ende am Kragarm (12) angreift.

4. Abweisvorrichtung nach Anspruch 3, **dadurch gekennzeichnet, dass** die beiden Rohre (30,31) einen gemeinsamen Fuß (18) haben, der an dem jeweiligen Längsträger (2) befestigt ist.

5. Abweisvorrichtung nach Anspruch 4, **dadurch gekennzeichnet, dass** der Fuß (18) um eine vertikale Achse (33) schwenkbar am Längsträger (2) so befestigt ist, dass er erst bei Einwirkung einer bestimmten Kollisionskraft auf das betreffende Rad (6) zu verschwenkt wird (Pfeil 20).

6. Abweisvorrichtung nach Anspruch 1, **dadurch gekennzeichnet, dass** die Kraftquelle (15) eine Druckfeder ist oder enthält.

7. Abweisvorrichtung nach Anspruch 1, **dadurch gekennzeichnet, dass** die Kraftquelle (15) ein pyrotechnischer Satz ist oder einen solchen enthält.

8. Abweisvorrichtung nach Anspruch1, **dadurch gekennzeichnet, dass** der Schild (13) Versteifungsrippen (25) aufweist.

## Claims

1. Deflecting device for an offset frontal collision for motor vehicles, the front end of which motor vehicles has a left and a right longitudinal member (2, 3), and the deflecting device being arranged in front of a front wheel (6) and protecting the front wheel in the event of a collision, **characterized in that** said deflecting device is composed of a jib (12), which is fastened to the front end of the vehicle, and a shield (13) which is moveable on said jib (12) outward transversely with respect to the direction of travel, with the jib (12) extending in front of the wheel (6) substantially transversely with respect to the direction of travel and having a guide (14) for the shield (13) and a force source (15) for moving the shield (13) outward, and with the jib (11) being fastened, so as to be pivotable about a vertical axis (33), to the longitudinal member (2) in such a way that, in the event of a collision, said jib (11) is pivoted (arrow 20) in the direction of the respective wheel (6), so that the shield (13**) which has been moved outward embraces the wheel (6) and pivots it into the position (6*), in which the wheel (6) itself also deflects the collision counterpart.

2. Deflecting device according to Claim 1, **characterized in that** the guide (14) is composed of two parallel tubes (30, 31), which form the jib (12), and at least one bracket (16, 17) which is fastened to the shield (13), with the at least one bracket (16, 17) being attached to that side of the shield (13) which faces toward the wheel (6).

3. Deflecting device according to Claim 2, **characterized in that** the force source (15) is arranged between the two tubes (30, 31), the one end of which force source (15) engages on the bracket (16) and the other end of which force source (15) engages on the jib (12).

4. Deflecting device according to Claim 3, **characterized in that** the two tubes (30, 31) have a common foot (18) which is fastened to the respective longitudinal member (2).

5. Deflecting device according to Claim 4, **characterized in that** the foot (18) is fastened to the longitudinal member (2), so as to be pivotable about a vertical axis (33), in such a way that said foot (18) is pivoted towards the respective wheel (6) (arrow 20) only when a certain collision force acts.

6. Deflecting device according to Claim 1, **characterized in that** the force source (15) is or contains a pressure spring.

7. Deflecting device according to Claim 1, **characterized in that** the force source (15) is or contains a pyrotechnic charge.

8. Deflecting device according to Claim 1, **characterized in that** the shield (13) has stiffening ribs (25).

## Revendications

1. Dispositif de déflexion, intervenant en cas de collision frontale à recouvrement partiel, pour véhicules automobiles dont la partie avant comprend un longeron gauche et un longeron droit (2, 3), et qui est disposé devant une roue avant (6) et protège la roue avant en cas de collision, **caractérisé en ce qu'**il est constitué d'un bras en porte-à-faux (12) fixé à la partie avant et d'un bouclier (13) pouvant coulisser vers l'extérieur sur celui-ci transversalement par rapport à la direction de conduite, le bras en porte-à-faux (12) s'étendant devant la roue (6) essentiellement transversalement par rapport à la direction de conduite et comprenant un guide (14) pour le bouclier (13) et une source de force (15) pour le coulissement du bouclier (13) vers l'extérieur, et le bras en porte-à-faux (11) étant fixé au longeron (2) de manière pivotante autour d'un axe vertical (33) de telle sorte qu'il soit pivoté (flèche 20) en direction de la roue concernée (6) en cas de collision, de sorte que le bouclier (13**) coulissé vers l'extérieur entoure la roue (6) et soit en l'occurrence pivoté dans la position (6*) à laquelle également la roue (6*) elle-même dévie l'autre véhicule impliqué dans la collision.

2. Dispositif de déflexion selon la revendication 1, **caractérisé en ce que** le guide (14) est constitué de deux tubes (30, 31) parallèles formant le bras en porte-à-faux (12) et d'au moins une console (16, 17) fixée au bouclier (13), l'au moins une console (16, 17) étant montée sur le côté du bouclier (13) qui est tourné vers la roue (6).

3. Dispositif de déflexion selon la revendication 2, **caractérisé en ce que** la source de force (15) est disposée entre les deux tubes (30, 31), une extrémité de laquelle vient en prise avec la console (16) et l'autre extrémité de laquelle vient en prise avec le bras en porte-à-faux (12).

4. Dispositif de déflexion selon la revendication 3, **caractérisé en ce que** les deux tubes (30, 31) ont une base commune (18) qui est fixée au longeron respectif (2).

5. Dispositif de déflexion selon la revendication 4, **caractérisé en ce que** la base (18) est fixée au longeron (2) de manière pivotante autour d'un axe vertical (33) de telle sorte qu'elle soit pivotée (flèche 20) en direction de la roue concernée (6) en cas d'action d'une force de collision déterminée.

6. Dispositif de déflexion selon la revendication 1, **caractérisé en ce que** la source de force (15) est ou contient un ressort de compression.

7. Dispositif de déflexion selon la revendication 1, **caractérisé en ce que** la source de force (15) est une charge pyrotechnique ou contient une telle charge pyrotechnique.

8. Dispositif de déflexion selon la revendication 1, **caractérisé en ce que** le bouclier (13) comprend des nervures de rigidification (25).
